(19) Europäisches Patentamt

European Patent Office

Office européen des brevets

(11) **EP 0 427 921 B1**

(12) **EUROPÄISCHE PATENTSCHRIFT**

(45) Veröffentlichungstag und Bekanntmachung des Hinweises auf die Patenterteilung:
**24.01.1996 Patentblatt 1996/04**

(51) Int Cl.⁶: **H04L 12/40**

(21) Anmeldenummer: **90114906.2**

(22) Anmeldetag: **03.08.1990**

(54) **Verfahren zur Übertragung von Daten sowie Anordnung**

Method and device for data transmission

Méthode et dispositif de transmission de données

(84) Benannte Vertragsstaaten:
**BE DE FR GB IT NL SE**

(30) Priorität: **14.11.1989 DE 3937814**

(43) Veröffentlichungstag der Anmeldung:
**22.05.1991 Patentblatt 1991/21**

(73) Patentinhaber: **ANT Nachrichtentechnik GmbH D-71522 Backnang (DE)**

(72) Erfinder: **Heichler, Johannes, Dipl.-Ing. D-7151 Murrhardt 3 (DE)**

(56) Entgegenhaltungen:
**EP-A- 0 150 457      EP-A- 0 364 700
DE-A- 3 433 150      US-A- 4 445 222
US-A- 4 742 309**

- **PATENT ABSTRACTS OF JAPAN vol. 5, no. 66 (E-55)2. Mai 1981 & JP-A-56 014 744 (FUJITSU LTD) 13. Dezember 1981**
- **REGELUNGSTECHNISCHE PRAXIS Nr. 10 , 1983 , D Seiten 61 - 70 B.WIEMANN ET AL. 'BUSSYSTEME'**

**Beschreibung**

Die Erfindung geht aus von einem Verfahren gemäß dem Oberbegriff des Patentanspruchs 1. Ein solches Verfahren liegt der Anordnung gemäß der DE 29 53 275 C2 zugrunde.

Datensender, bzw. Datenübertragungseinrichtungen, werden über Buskoppler galvanisch getrennt auf Busleitungen geschaltet. Die Datenübertragung auf dem Bus folgt beispielsweise gemäß DE 29 53 275 C2 in Form von Differenzsignalen.

Buskoppelschaltungen in Busempfängern, die Hysteresebeschaltungen aufweisen, sind aus "Regelungstechnische Praxis, 25. Jahrgang, 1983, Heft 10, Seiten S. 61 bis S. 64 sowie Seiten S. 69 bis S. 70 bekannt. Die Hysteresebeschaltungen dienen dort zur Unterdrückung überlagerter Störsignale.

Aus der DE 34 33 150 A1 ist eine Teilnehmerschaltung zur Ankopplung eines Teilnehmers an einen Bus bekannt. Es sind dort Maßnahmen getroffen zur Absicherung aller Teilnehmer gegen Kurzschlüsse an der Schnittstelle.

In der nicht vorveröffentlichten EP-A-0 364 700 wurde vorgeschlagen zur Schaffung einer Buskoppelschaltung mit Fehlertoleranz für die Übertragung unipolarer Signale jeden Bustreiber mit einer zusätzlichen Hysteresebeschaltung zu versehen, um am gleichstromfreien Ankoppelpunkt des Bustreibers an den Bus einen Gleichspannungswert wieder einzuführen.

Aufgabe vorliegender Erfindung ist es bei einem Verfahren für die Übertragung von Daten in Form von Differenzsignalen ausgehend vom Oberbegriff des Patentanspruchs 1 eine Fehlertoleranz einzuführen sowie eine Anordnung zum Durchführen dieses Verfahrens anzugeben. Diese Aufgabe wird bezüglich des Verfahrens durch die Schritte des Patentanspruchs 1 und bezüglich der Anordnung durch die Merkmale des Patentanspruchs 4 gelöst. Die übrigen Patentansprüche zeigen Weiterbildungen des Verfahrens auf.

Die Maßnahmen nach der Erfindung weisen folgende Vorteile auf:

Es wird ein definiertes Potential in den Sendepausen für die Teilnehmer zur Verfügung gestellt, was die Verknüpfung von Start-Stop-Bit-Betrieb (quasi-asynchroner Prozessorbetrieb) mit Parallel-Busbetrieb ermöglicht. Die Tolerierung einer vorbestimmbaren Anzahl (TBD-to be determined) von Kurzschlüssen bei Teilnehmern inclusive ihren Buskopplern ist möglich, ohne daß der Betrieb zwischen den restlichen Teilnehmern über den Bus merklich gestört ist. Durch eine binäre Gleichtaktunterdrückung können konventionelle CMOS-Bausteine, z.B. der FACT (Fairchild Advanced CMOS Technology)-Technologie als Funktionsgenerator, beziehungsweise Busdecoder, in Form eines Multiplexers, eingesetzt werden.

Eine Gleichtaktstörung wird jeweils auf den Pegel eines ungestörten Vorzustandes zurückgeführt und damit unterdrückt. Die Zweidraht-Differenzübertragung wird hier als fehlerkorrigierender Code aufgefaßt, welcher Gleichtaktzustände unterdrückt und Gegentaktzustände verzerrungsfrei weitergibt. Mit den Maßnahmen nach der Erfindung wird selbsttätig ein Busabschluß beziehungsweise ein "elektrostatisches Busgrounding" zur Verfügung gestellt.

Anhand der Zeichnungen wird ein Ausführungsbeispiel der Erfindung näher erläutert.

Es zeigen

Figur 1       ein Prinzipschaltbild eines Buskopplers,

Figur 2       Spannungs-Zeit-Diagramme für ein empfangenes Datensignal und dessen Signalform auf dem Bus bei einer überlagerten Störung,

Figur 3       Spannungs-Zeit-Diagramme für ein Datensignal auf dem Bus bei Auftreten eines Kurzschlusses,

Figur 4       Spannungs-Zeit-Diagramme für ein Datensignal auf dem Bus bei Auftreten von zwei Kurzschlüssen.

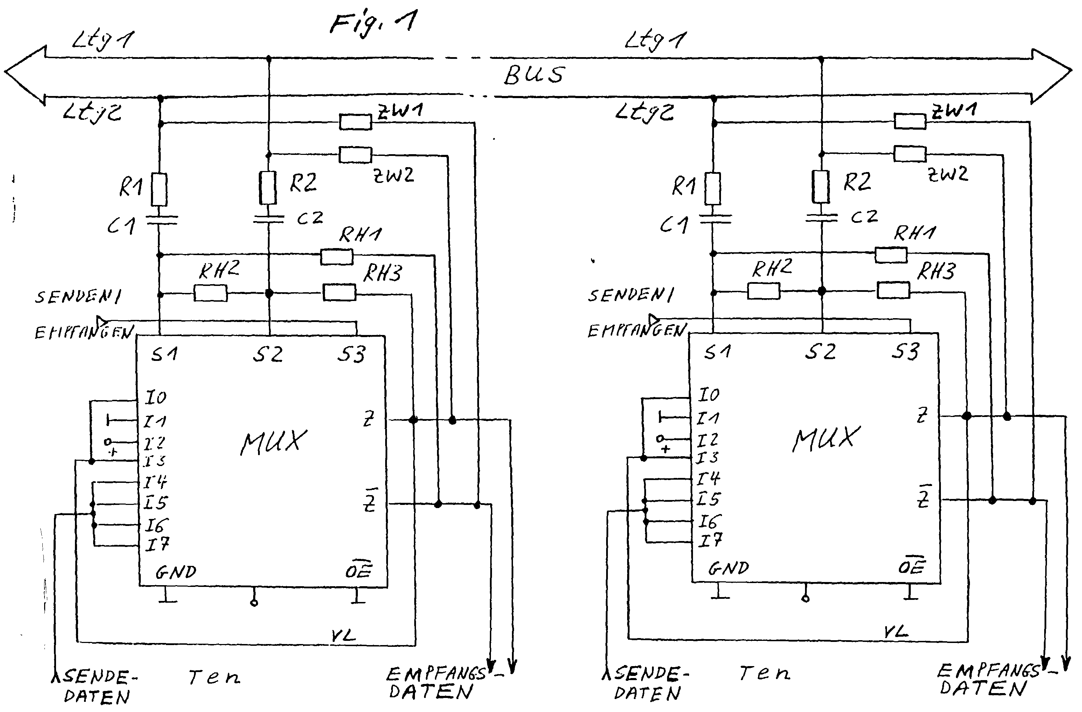

Figur 1 zeigt das Teilnehmer-Interface (Buskoppler) zwischen einem Teilnehmer Ten und dem Bus. An den Bus ist eine Vielzahl solcher Teilnehmer anschließbar, die jeweils als Datensender oder Datenempfänger betreibbar sind und Daten austauschen können. Die Datenübertragung erfolgt mit Differenzsignalen, wie sie bei ausgedehnten Leitungssystemen wegen der Induktionsschleifenfreiheit vorwiegend zur Anwendung kommt. Als Buskoppler wird ein handelsüblicher Multiplexer, z.B. AC 251 in CMOS-FACT-Technologie, verwendet, der durch eine erfindungsgemäß gewählte spezielle Beschaltung alle Anforderungen, insbesondere hinsichtlich einer Fehlertoleranz erfüllt. Die Ankopplung der beiden Busleitungen Ltg 1 und Ltg 2 an die beiden Adresseingänge S1 und S2 des Multiplexers MUX erfolgt jeweils galvanisch getrennt über die Trennkondensatoren C1 und C2 und die Serienwiderstände R1 und R2. Die Dateneingänge sind mit I0 bis I7 bezeichnet und der Datenausgang mit Z, beziehungsweise $\overline{Z}$ für ein invertiertes Ausgangssignal. Über den Adresseingang S3 kann zwischen Sende-und Empfangsbetrieb des Multiplexers umgeschaltet werden. In Senderichtung werden die über die Eingänge I4 bis I7 zugeführten Daten eines Teilnehmers über den Multiplexer MUX auf den Bus durchgeschaltet. In Empfangsrichtung gelangen die Daten auf dem Bus an die Adresseingänge S1 und S2 zum Multiplexer. Je nach Polarität der Signale auf den Leitungen Ltg 1 und Ltg 2 des Bus decodiert der Multiplexer MUX, wie noch erläutert wird, welche Signale als Empfangsdaten ausgewertet werden.

Im Sendebetrieb wird an den Adresseingang S3 ein logisches H-Signal gelegt. Die Multiplexer-Eingänge I4 bis I7, die alle miteinander verbunden sind und die Sendedaten zugeführt bekommen, sind dann auf den Bus durchgeschaltet. Welche Potentiale die anderen Adresseingänge aufweisen, spielt keine Rolle ("don't care"-Zustand).

Der Multiplexer MUX weist folgende Wahrheitstabelle auf:

| S3 | S2 | S1 | Z |
|----|----|----|----|
| L | L | L | I0 |
| L | L | H | I1 |
| L | H | L | I2 |
| L | H | H | I3 |
| H | L | L | I4 |
| H | L | H | I5 |
| H | H | L | I6 |
| H | H | H | I7 |

Der Multiplexer-Eingang I1 ist auf Masse (L-Potential) gelegt und der Eingang I2 auf eine positive Spannung (H-Potential). Die Eingänge I0 und I3 sind mit dem Datenausgang Z verbunden. Mit dieser Beschaltung und der Wahrheitstabelle des Multiplexers MUX werden im Empfangsbetrieb, der Adresseingang S3 weist dann ein logisches L-Signal auf, nur die Gegentaktzustände des Bussignals an den Adresseingängen S1 und S2 als feste logische Pegel (Multiplexer-Eingänge I1 und I2) decodiert, während sonst - bei Gleichtaktzuständen (Multiplexer-Eingänge I0 und I3) - durch die Signalrückkopplung - Verbindungsleitung VL - vom Datenausgang Z des Multiplexers MUX an jene Eingänge - I0 und I3 -, deren binär codierte Rangfolge den Gleichtaktzuständen - 00,11 - entsprechen - der alte - zuvor aufgetretene - logische Pegel übernommen wird. Somit wird eine Gleichtaktstörung jeweils auf den alten Pegel zurückgeführt und diese dadurch unterdrückt. Die Signalrückkopplung ist jedoch nur im Empfangsbetrieb wirksam. Im Sendebetrieb wird sie dadurch unterdrückt, daß durch die Belegung des Adresseingangs S3 mit H-Potential nur Signale an den Eingängen I4 bis I7 wirksam durchschaltbar sind. Über die Hysteresewiderstände RH1, RH2 und RH3 wird eine Vorspannung der Adresseingänge S1 und S2 erreicht.

Diese Hysteresewiderstände RH1, RH2 und RH3 sind folgendermaßen angeordnet: Der Hysteresewiderstand RH1 liegt zwischen dem Adresseingang S1 und dem $\overline{Z}$ -Datenausgang des Multiplexers MUX, der Hysteresewiderstand RH2 zwischen den Adresseingängen S1 und S2 und der Hysteresewiderstand RH3 zwischen dem Adresseingang S2 und dem Z-Datenausgang. Die Vorspannung an den Adresseingängen S1 und S2 wird erzeugt durch die Spannungsabfälle an den Hysteresewiderständen RH1, RH2 und RH3.

Der durch die Gleichspannungsabtrennung (Kondensatoren C1, C2) verlorengegangene Gleichspannungswert wird also in Form der Vorspannung der Adresseingänge S1, S2 wiedereingeführt. Diese Wiedereinführung der Gleichspannungswerte ist zur Erlangung der Fehlertoleranz wichtig, wie nachfolgend noch beschrieben wird.

Eine Flanke mit Differenzcharakter (eine positive Flanke am einen und eine negative Flanke am anderen Eingang) wird somit über die Hysteresewiderstände rückgekoppelt.

Es ergibt sich folgender Betrieb:

Bei vollständig intaktem System (keine Kurzschlüsse oder Unterbrechungen bei den Teilnehmern und bei den Buskopplern) werden im Sendebetrieb die Sendedaten eines Teilnehmers über seinen Multiplexer MUX von den Eingängen I4 bis I7 auf die Ausgänge Z beziehungsweise $\overline{Z}$ geschaltet und über die Widerstände ZW1 und ZW2, die jeweils zwischen einem Datenausgang Z, $\overline{Z}$ und einer Busleitung Ltg1, Ltg2 angeordnet sind, zum Bus geführt. Bei einem Kurzschluß des Multiplexers MUX an den Datenausgängen Z und Z ist der Bus demnach passiv mit den Widerständen ZW1 beziehungsweise ZW2 abgeschlossen. Diese Widerstände ZW1 und ZW2 werden vorteilhafterweise wie der Wellenwiderstand des Busses, z.B. zu 100 Ohm, gewählt. Bei einem Kurzschluß an den Adresseingängen S1 und S2 ist der Bus mit den Widerständen R1, R2 und ZW1, ZW2 abgeschlossen. Es liegt also eine vollständige Fehlertoleranz vor; d.h. ein Fehler bei einem Teilnehmer oder seinem Buskoppler führt nicht zur Störung des Betriebes anderer Teilnehmer über den Bus.

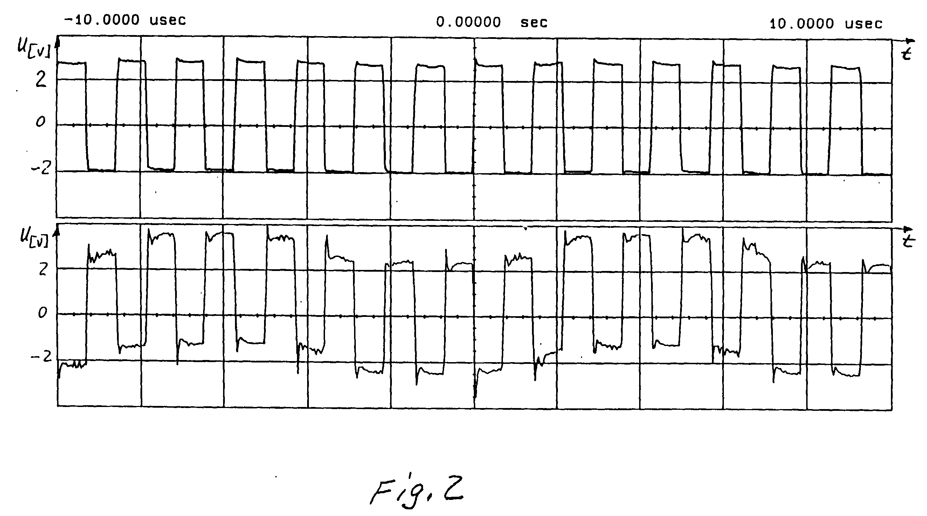

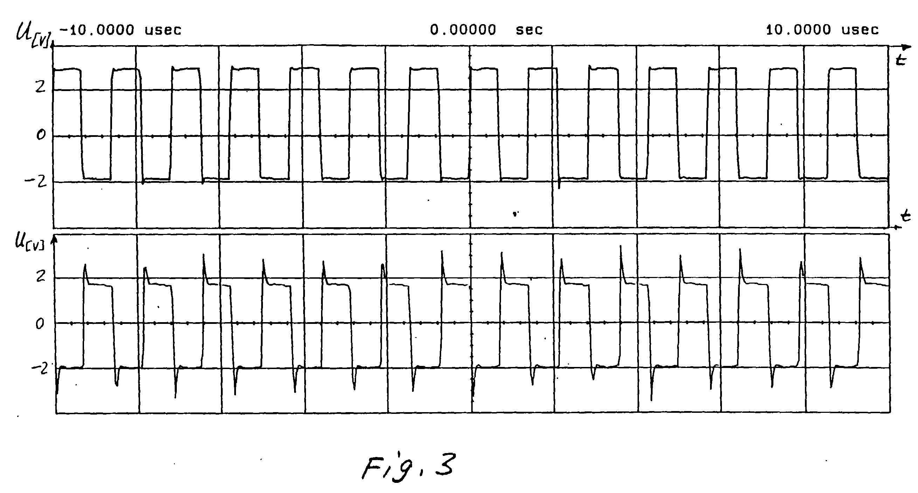

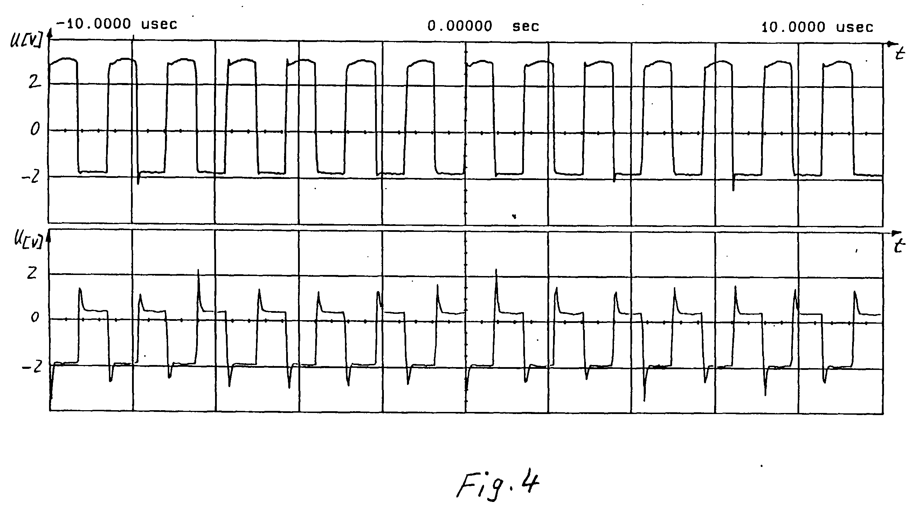

In den Figuren 2 bis 4 ist der zeitliche Spannungsverlauf eines empfangenen Datensignals - jeweils oberes Diagramm - und der Signalform, die auf dem Bus aus dem gesendeten Signal beim Vorliegen von Störungen resultiert - jeweils unteres Diagramm - dargestellt. Im Falle von Figur 2 liegt eine überlagerte Störung mit einem 100 kHz Rechtecksignal vor. Im Falle von Figur 3 ist ein Kurzschluß bei einem Teilnehmer, beziehungsweise seinem Buskoppler, eingetreten und bei Figur 4 sind Kurzschlüsse bei zwei Teilnehmern beziehungsweise den entsprechenden Buskopplern gleichzeitig aufgetreten. Wie die Figuren 3 und 4 zeigen, nimmt die Signalamplitude auf dem Bus mit steigender Zahl der auftretenden Kurzschlüsse ab, da der Bus bei n Kurzschlüssen durch die Parallelschaltung von jeweils n Widerständen ZW1 beziehungsweise ZW2 abgeschlossen ist. Die Wahl der Vorspannungen an den Adresseingängen S1 und S2 muß diesen Gegebenheiten angepaßt werden, um eine erhöhte Fehlertoleranz zu erreichen. Wird die Vorspannung durch entsprechende Dimensionierung der Hysteresewiderstände wenig unterhalb der Ansprechschwelle der Adresseingänge des Multiplexers MUX gewählt, kann in allen dargestellten Fällen noch eine sichere Entscheidung erfolgen welche Art von Daten (0 oder 1 Zustände) gesendet wurden. Für die Dimensionierung der Widerstände gilt folgendes:

Wichtig ist zunächst die Voraussetzung, daß die Hysteresewiderstände RH1...3 wesentlich größer als die Widerstände R1, R2, ZW1, ZW2 sein sollen. Das vereinfacht die Betrachtung etwas und erleichtert den Treibern die Last. Weiterhin vereinfacht sich die Betrachtung durch die Tatsache, daß die Bausteine MUX keine wirklichen Differenztreiber bzw. Empfänger sind, sondern normale FACT-Gatternetzwerke. Man kann also die Aus- und Eingänge elektrisch getrennt betrachten. Lediglich die logische Verknüpfung macht aus der Schaltung eine Differenzstufe!

Die Funktion ist dann wie folgt:

Ein Treiber, der gerade sendet, prägt auf den Bus eine Gegentaktspannung mit der treibenden Impedanz Zw (Zw1 = Zw2). Die vorgefundene Last beträgt bei k Teilnehmern:

$$Z1 = Zw/k \ .$$

Die Widerstände RH1...3 sind dabei, wie gesagt, wegen ihrer Hochohmigkeit vernachlässigt. Die Gleichung kommt dadurch zustande, daß im ersten Schaltmoment jeder Widerstand Zw mit dem busfernen Ende auf dem Ausgang des Empfängers (Z, $\bar{Z}$) liegt. Derselbe ist (FACT) mit ideal 0 Ohm angesetzt. Damit beträgt der Spannungssprung an den Eingängen S1 bzw. S2 (Leitungseffekte hier vernachlässigt):

$$U(S1,2) = 5V \ x \ (Zw/k):(Zw/k + Zw);$$

oder:

$$U(S1,2) = 5V \ x \ 1/(k+1) \ .$$

5V ist hier die Versorgungsspannung für die jeweiligen Multiplexer MUX.

Der Spannungssprung ist also nur durch die Anzahl der Teilnehmer bestimmt. Je mehr Teilnehmer, um so kleiner wird er, was systematisch diese Anzahl auch begrenzt.

Die eingestellte Hysterese muß dementsprechend bemessen sein. Sie muß naturgemäß von diesem Spannungssprung überschritten werden, da sonst die Empfänger nie schalten und so auch nicht "mithelfen" können. Damit darf sich der exponentielle Abfall der Kondensatorspannungen am Eingang von einem vorherigen Sprung nur einschwingen auf höchstens:

$$Uhs1+ = 5V \ x \ (RH2+RH3):(RH1+RH2+RH3) \ -2.5V \leq U(S1);$$

und:

$$Uhs2+ = 5V \ x \ (RH2+RH1):(RH1+RH2+RH3) \ -2.5V \leq U(S2);$$

oberhalb der 2.5V-Schwelle, je nachdem, welcher Eingang gerade das "HIGH"-Signal bekommt. Für das "LOW"-Signal gilt entsprechendes, was auf Grund von Symmetriebetrachtungen einfach einzusehen ist.

Es gilt dann:

$$Uhs1- = 2.5V - 5V \ x \ (RH1):(RH1+RH2+RH3);$$

und:

$$Uhs2- = 2.5V - 5V \ x \ (RH3):(RH1+RH2+RH3);$$

unterhalb der 2.5V-Schwelle. (Durch Gleichsetzen der Uhs1+ und Uhs1- sowie Uhs2+ und Uhs2- kann man leicht nachweisen, daß diese betragsmäßige Gleichheit und damit die Symmetrie der Hysterese tatsächlich erfüllt ist). Solange, wie gesagt, diese Hysteresen noch im Gegentakt durchfahren werden, spricht der Empfänger an. Treten Kurzschlüsse auf, so hängt es davon ab, ob diese an den Ausgängen Z, $\bar{Z}$ des Multiplexers MUX auftreten oder an den Adresseingängen S1, S2 (beides muß in Betracht gezogen werden). Beim Fall, daß einer der Ausgänge kurzschließt, ändert sich an der Flankenspannung auf dem Bus gar nichts, denn der Sender "sieht" nach wie vor die oben errechnete Last. Lediglich die Mithilfe nach dem Überschreiten der Schwelle erlischt, was aber unkritisch ist, da der Schaltvorgang dann bereits abgelaufen ist.

Tritt jedoch ein Kurzschluß an einem Adresseingang S1,2 auf, dann schaltet sich dieser Last noch der betreffende R1,2 parallel. Die Wahl dieser Widerstände kann aus Geschwindigkeitsgründen aber nicht zu hochohmig erfolgen: Die Größenordnung muß auf jeden Fall Zw sein. Somit erreichnet sich bei n Kurzschlüssen die Last für den Sender:

$$Z1 = 1/(k/Zw + n/R) \ .$$

Dann wird auf Grund der Spannungsteilung die Spannung am Adresseingang:

$$U(S1,2) = 5V \ x \ (1/(1+k+nZw/R)) \ .$$

(Das neue Z1 in die Gleichung für U(S1,2) eingesetzt). Für n=0 ergibt sich dann das alte U(S1,2), in dem nur noch die Teilnehmerzahl vorkommt.

Die Anzahl der tolerierbaren Kurzschlüsse hängt jetzt wiederum davon ab, auf welchen Wert die Spannung am Empfängereingang absinken darf: Den Wert der Hysteresespannung nämlich. Sie beträgt aber:

$$Uhs1+ = 5V \ x \ (RH2+RH3):(RH1+RH2+RH3) \ -2.5V \ .$$

Jetzt kann ohne Einschränkung der Allgemeinheit wieder Symmetrie vorausgesetzt werden, d.h. der reine Betrag der Hysteresespannung genommen werden mit RH1 = RH3 = Rh und RH2 = Rhd:

$$Uh = 5V \times (Rhd+Rh):(2Rh+Rhd) -2.5V \ .$$

Und mit Uh ≤ U(S1,2) ergibt sich nach Auflösen nach n:

$$n \leq R/Zw \times (4Rh/Rhd - (k-1)) \ ;$$

für die tolerierbare Anzahl der Kurzschlüsse. Wie man sieht, geht R (Widerstand vor dem Kondensator) in die Fehlertoleranz ein. Für ein spezielles Ausführungsbeispiel war bemessen:

$$R = Zw, \ Rh/Rhd = 7, \ k = 8 \ ;$$

so daß theoretisch zugelassen werden konnte:

$$n = 21 \ ;$$

also ein Wert, der weit über der Anzahl der Teilnehmer liegt. Die Ursache dieser hohen Fehlertoleranz liegt in:

a) Der hohen Bemessung von Rh/Rhd (die Hysterese betrug nur noch ca. 0.35 Volt), was man sich wegen der binären Gleichtaktunterdrückung leisten kann.

b) Der Tatsache, daß der hier errechnete worst-case-Fall eines Eingangskurzschlusses viel seltener ist als der Kurzschluß eines Ausganges. Dann aber wirkt keinerlei erhöhte Last auf den Sender. Mehr Kurzschlüsse als Teilnehmer kann es nur dann geben, wenn gleich mehrere Defekte an einem Teilnehmer auftreten. Der Fall ist jedoch noch viel seltener.

Bei der Differenzsignalübertragung erlaubt der hohe Differenz-Störabstand eine sehr niedrige Einstellung der Hysterese. Sie darf wegen der binären Gleichtaktunterdrückung durchaus auch von Spikes durchfahren werden.

Ein quasi-asynchroner Start-Stop-Bit-Betrieb ist durch die Maßnahmen der Erfindung möglich. Ein Stop-Bit bleibt durch die Signalrückkopplung vom Z-Ausgang auf die IO/I3 Eingänge während der "Guard Time" im "Bus-Gedächtnis".

**Patentansprüche**

1. Verfahren zur Übertragung von Daten in Form von Differenzsignalen zwischen Teilnehmern, die über einen Bus miteinander in Verbindung stehen, wobei die Ankopplung der Teilnehmer an den Bus jeweils galvanisch getrennt erfolgt und wobei für jeden Teilnehmer ein Multiplexer als Busdecoder zur Datenauswertung vorgesehen ist, dadurch gekennzeichnet, daß der Multiplexer durch ein Steuersignal zwischen Sende- und Empfangsbetrieb umgeschaltet wird, daß beim Empfangsbetrieb des Multiplexers nur die Gegentaktzustände der Daten auf der Busleitung als logische Pegel decodiert werden, wohingegen bei Gleichtaktzuständen der zuvor decodierte logische Pegel übernommen wird, daß beim Empfangsbetrieb eine Signalrückkopplung der den Multiplexer passierenden Signale über eine zusätzliche Hysteresebeschaltung zur Wiederherstellung des Gleichspannungswertes am Busdecoder vorgenommen wird und daß die Signalrückkopplung über die Hysteresebeschaltung beim Sendebetrieb unwirksam geschaltet wird.

2. Verfahren nach Anspruch 1, dadurch gekennzeichnet, daß bei jedem Teilnehmer ein aktiver Busabschluß über Widerstände, deren Werte dem Wellenwiderstand der Busleitung entsprechen, vorgenommen wird.

3. Verfahren nach Anspruch 1 oder 2, dadurch gekennzeichnet, daß über die Hysteresebeschaltung die Vorspannung der Adresseingänge des Multiplexers, denen die Daten auf dem Bus zugeführt werden, wenig unterhalb ihrer Ansprechschwelle eingestellt wird.

4. Anordnung zum Durchführen des Verfahrens nach einem der Ansprüche 1 bis 3 und zur Übertragung von Daten in Form von Differenzsignalen zwischen Teilnehmern, die über einen Bus miteinander in Verbindung stehen, wobei die Ankopplung der Teilnehmer an den Bus jeweils galvanisch getrennt erfolgt, gekennzeichnet durch:

- einen Multiplexer (MUX) für jeden Teilnehmer (Ten),

- einen Gleichstromabtrennkondensator (C1, C2) zwischen jeweils einer Busleitung (Ltg1, Ltg2) und einem Adresseingang (S1, S2) eines Multiplexers (MUX),

- jeweils einen ersten Hysteresewiderstand (RH1, RH3) zwischen den Adresseingängen (S1, S2) und den Datenausgängen des Multiplexers (Z, $\bar{Z}$ ),

- jeweils einen zweiten Hysteresewiderstand (RH2) zwischen den Adresseingängen (S1, S2) des Multiplexers (MUX),

- jeweils eine Verbindungsleitung (VL) zwischen einem Datenausgang (Z) des Multiplexers (MUX) und jenen Eingängen (I0, I3) des Multiplexers (MUX), deren binär codierte Rangfolge Gleichtaktzuständen (00, 11) entsprechen.

## Claims

1. Method for transmitting data in the form of differential signals between subscribers interconnected via a bus, in which the coupling of the subscribers onto the bus is DC-decoupled in each case and in which a multiplexer is provided for each subscriber as a bus decoder for data evaluation, characterized in that the multiplexer is switched over between transmit and receive mode by a control signal, in that in the receive mode of the multiplexer only the out-of-phase states of the data on the bus line are decoded as logical levels, whereas in the care of in-phase states the previously decoded logical level is transferred, in that in the receive mode a signal feedback of the signals passing through the multiplexer via an additional hysteresis connection is carried out to restore the direct current voltage value at the bus decoder, and in that the signal feedback via the hysteresis connection is deactivated during the send mode.

2. Method according to Claim 1, characterized in that an active bus termination is performed at every subscriber by means of resistors, the values of which correspond to the characteristic impedance of the bus line.

3. Method according to Claim 1 or 2, characterized in that the bias voltage of the address inputs of the multiplexer to which the data are supplied on the bus is set by means of the hysteresis connection to slightly below their response threshold.

4. Arrangement for carrying out the method according to one of Claims 1 to 3 and for transmitting data in the form of differential signals between subscribers interconnected via a bus, in which the coupling of the subscribers onto the bus is DC-decoupled in each case, characterized by:

   - a multiplexer (MUX) for every subscriber (Ten),
   - a direct current decoupling capacitor (C1, C2) between in each case one bus line (Ltg1, Ltg2) and one address input (S1, S2) of a multiplexer (MUX),
   - in each case a first hysteresis resistor (RH1, RH3) between the address inputs (S1, S2) and the data outputs of the multiplexer (Z, $\bar{Z}$),
   - in each case a second hysteresis resistor (RH2) between the address inputs (S1, S2) of the multiplexer (MUX),
   - in each case one connecting line (VL) between one data output (Z) of the multiplexer (MUX) and the inputs (I0, I3) of the multiplexer (MUX) whose binary coded ranking corresponds to in-phase states (00, 11).

## Revendications

1. Procédé de transmission de données sous forme de signaux différentiels entre des abonnés qui sont en liaison les uns avec les autres par un bus, dans lequel le couplage des abonnés au bus a lieu de façon séparée galvaniquement, et dans lequel on prévoit pour chaque abonné un multiplexeur comme décodeur de bus pour exploiter les données, procédé caractérisé en ce qu'on bascule le multiplexeur, au moyen d'un signal de commande, entre le fonctionnement en émetteur et le fonctionnement en récepteur, en ce que, quand le multiplexeur est en fonctionnement en récepteur, on ne décode que les états symétriques des données sur la ligne de bus comme niveau logique, par contre, dans le cas d'états synchronisés, le niveau logique décodé auparavant prend la relève, en ce que, lors du fonctionnement en récepteur, un rétrocouplage des signaux qui passent dans le multiplexeur est utilisé au moyen d'un circuit additionnel à hystérésis pour rétablir la valeur de la tension continue sur le décodeur, et en ce que le rétrocouplage des signaux est mis hors service par le circuit à hystérésis dans le cas du fonctionnement en émetteur.

2. Procédé selon la revendication 1, caractérisé en ce qu'on utilise chez chaque abonné un couplage actif de bus au moyen de résistances dont les valeurs correspondent à l'impédance caractéristique de la ligne de bus.

3. Procédé selon la revendication 1 ou 2, caractérisé en ce qu'on règle au moyen du circuit à hystérésis, la tension de polarisation des entrées d'adresse du multiplexeur auxquelles sont amenées les données sur le bus, un peu en dessous de leur seuil d'amorçage.

4. Dispositif pour mettre en oeuvre le procédé selon l'une des revendications 1 à 3 et pour transmettre des données sous la forme de signaux différentiels entre des abonnés qui sont en liaison les uns avec les autres par un bus, le couplage des abonnés au bus ayant lieu respectivement de façon galvaniquement séparée, caractérisé par :

- un multiplexeur (MUX) pour chaque abonné (Ten),
- un condensateur de séparation du courant continu (C1, C2) entre respectivement une ligne de bus (Ltg 1, Ltg 2) et une entrée d'adresse (S1, S2) d'un multiplexeur (MUX),
- respectivement une première résistance à hystérésis (RH1, RH3) entre les entrées d'adresse (S1, S2) et les sorties de données du multiplexeur (Z, $\bar{Z}$ ),
- respectivement une seconde résistance à hystérésis (RH2) entre les entrées d'adresse (S1, S2) du multiplexeur (MUX),
- respectivement une ligne de liaison (VL) entre une sortie d'adresse (Z) du multiplexeur (MUX) les entrées (I0, I3) du multiplexeur (MUX), dont la hiérarchie codée binairement correspond aux états en synchronisme (00,11).

Fig. 1

EP 0 427 921 B1

Fig. 2

EP 0 427 921 B1

Fig. 3

EP 0 427 921 B1

Fig. 4

EP 0 427 921 B1